# EUROPEAN PATENT SPECIFICATION

(11) **EP 3 171 351 B1**
(45) Date of publication and mention of the grant of the patent: **16.02.2022**
(21) Application number: 15822241.4
(22) Date of filing: 05.06.2015
(51) Int. Cl.: G08C 19/00, G06K 9/00, G06K 9/46, G01D 5/39

(54) **MEASUREMENT DATA PROCESSING SYSTEM**
MESSDATENVERARBEITUNGSSYSTEM
SYSTÈME DE TRAITEMENT DE DONNÉES DE MESURE

(30) Priority: 15.07.2014 JP 2014144901
(43) Date of publication of application: 24.05.2017
(60) Divisional application: 19158283.2
(73) Proprietor: Hitachi, Ltd., Chiyoda-ku Tokyo 100-8280 (JP)
(72) Inventor: TSUTSUMI, Daisuke, Tokyo 100-8280 (JP); OKADA, Norihisa, Tokyo 100-8280 (JP); UENO, Hidenori, Tokyo 100-8280 (JP); TAMURA, Takuo, Tokyo 100-8280 (JP); KASAI, Hiroaki, Tokyo 100-8280 (JP)
(74) Representative: Mewburn Ellis LLP
(86) International application number: PCT/JP2015/066337
(87) International publication number: WO 2016/009740

(56) References cited:
- WO-A1-2009/119489
- WO-A1-2014/034683
- JP-A- 2001 250 185
- JP-A- 2003 272 076
- JP-A- 2003 521 768
- JP-A- 2006 285 303
- JP-A- 2011 002 878
- JP-A- 2011 002 878
- JP-A- 2014 130 397
- US-A1- 2012 205 440
- None

## Description

### Technical Field

The present invention relates to a measurement data processing system that recognizes measurement data from a measurement result display part of each of diverse measuring instruments and outputs measurement results.

### Background Art

In a factory manufacturing traffic vehicles or the like, the dimensions and performance of all components of a vehicle structure in every manufacturing process and various physical quantities in a manufacturing environment, among others, are measured by diverse measuring instruments and a procedure of putting thus obtained measurement data together in an inspection record form has so far carried out manually in most cases. Considering that a worker performs a procedure of reading the measurement results of each of diverse measuring instruments and writing them into an inspection record form or inputting them to an inspection record form system, this inevitably involves an input error and it remains impossible to improve working efficiency.

It is a future ideal image to install an interface common for diverse measuring instruments and configure a system that implements automatically uploading measurement data from the diverse measuring instruments, thus collecting the measurement data. However, to incorporate a common interface into diverse measuring instruments which were manufactured individually, it is needed to redesign the diverse measuring instruments individually, which results in creating an ambitious system.

Accordingly, we envisaged a "compact" measurement data processing system that externally recognizes measurement data from a measurement result display part of each of diverse measuring instruments which are used as general-purpose articles and outputs measurement results to, for example, an inspection record form system.

As background art in the present technical field, there is Japanese Patent No. 3587775 (Patent Literature (PTL) 1). In this publication, there is a description as follows: "A display data analysis apparatus that analyzes measurement data measured and displayed by a predetermined measuring device and outputs results of the analysis to a predetermined processing device, the display data analysis apparatus including an image capturing means that captures an image; a detection means that is configured to detect measurement data displayed by the measuring device in an image captured by the image capturing means through the use of an index attached to the measuring device as detection assisting information for detecting measurement data displayed by the measuring device; an analysis means that is configured to, when the measurement data has been detected by the detection means, analyze measurement data captured by the image capturing means through the use of analysis assisting information for analyzing measurement data displayed by the display device; and an output means that outputs results of analysis made by the analysis means." There is also a description as follows: "characterized that it is attached to be adjacent to the outer perimeter of the measurement data display part."

There is also Japanese Patent Application Laid-Open No. 2012-181591 (PTL 2). In this publication, there is a description as follows: "in usage of an identification medium being attached to diverse commercial products to identify the authenticity of an object using the identification medium, it is important to prevent a malicious third party from altering, falsifying, and duplicating the identification medium with ease. For this reason, in a part or whole of a transparent sheet which is provided over the surface of a liquid crystal display having a light source and transmits light emitted from the light source, a two-dimensional code (identification medium) is formed including one or more polarizing regions that double-refracts the light."

US 2012/0205440 A1 provides another example of a transparent sticker placed on the display of a measuring instrument to identify said instrument.

### Citation List

### Patent Literature

PTL 1: Japanese Patent No. 3587775
PTL 2: Japanese Patent Application Laid-Open No. 2012-181591

### Summary of Invention

### Technical Problem

In PTL 1 mentioned above, described is the apparatus that recognizes an identification code attached in the periphery of a measurement data display screen of a measuring instrument and analyzes measurement values. However, considering a measurement environment of diverse measuring instruments, for example, in a manufacturing factory or the like, in the analysis apparatus of PTL 1, there is a possibility that, when recognizing a measurement value and an identification code, the recognition rate decreases depending on the environment where the analysis apparatus is used.

In such an analysis apparatus, when external light is incident on a measurement value display part; in some situations, the measurement value recognition rate decreases or a false recognition, i.e., misreading a numeric character occurs. If a cover or the like is put over a measuring instrument to block out external light, the display part can be recognized, if it includes a backlight function or the like, but an identification code attached in the periphery of the display part cannot be recognized in some situations, because it is not illuminated with light.

Moreover, in PTL 2 mentioned above, described is a method of reading a light transmissive two-dimensional code attached onto the display having the light source. However, in the reading method of PTL 2, there is a possibility that the identification code recognition rate decreases, if a reading position was fixed.

In this reading method, upon changing what has been displayed on a display part such as, e.g., a display, the amount of light emitted from the display part changes and, accordingly, the amount of light passing through an identification code placed on the display part changes and the identification code recognition rate decreases in some situations.

If the identification code reading position is variable, the recognition rate can sometimes be increased by changing the reading position in response to a change in the light passing rate. However, if a cover or the like was installed to cover over the display part to eliminate the influence of external light, it is needed to fix a reading device such as a camera inside the cover.

Moreover, it is also conceivable to equip the reading device with a driving mechanism inside the cover, but there is an installation space problem and another problem is making the device expensive.

Accordingly, the present invention provides a measurement data processing system capable of recognizing a measurement value stably without being subject to the influence of an environment.

### Solution to Problem

To address the problems noted above, in the present invention, a measurement data processing system is disclosed according to claim 1.

### Advantageous Effects of Invention

Although it has been difficult for a fixed reading means to stably recognize a measuring instrument identification code placed on a measuring instrument, the present invention makes it possible to recognize it stably and to build a simple measurement system.

Problems, configurations, and advantageous effects other than described above will be apparent from the following description of embodiments.

### Brief Description of Drawings

Fig. 1(a) is a schematic structure diagram of a measurement data processing system pertaining to a first embodiment of the present invention; and Fig. 1(b) is a structure diagram of a measuring instrument and an image acquisition means in the measurement data processing system.
Fig. 2 is a schematic structure diagram of a measurement data processing device.
Fig. 3 is a cross-sectional view of a structure diagram of a measuring instrument and an image acquisition means in the measurement data processing system.
Fig. 4 is a structure diagram of a measuring instrument and an image acquisition means in the measurement data processing system, which pertains to a second embodiment of the present invention.
Fig. 5 is a structure diagram of a measuring instrument and an image acquisition means in the measurement data processing system, which pertains to a third embodiment of the present invention.
Fig. 6 is a structure diagram of a measuring instrument and an image acquisition means in the measurement data processing system, which pertains to a fourth embodiment of the present invention.
Fig. 7 is a structure diagram of a measuring instrument and an image acquisition means in the measurement data processing system, which pertains to a fifth embodiment of the present invention.
Fig. 8 is a structure diagram of a measuring instrument and an image acquisition means in the measurement data processing system, which pertains to a sixth embodiment of the present invention.
Fig. 9 is a structure diagram of a measuring instrument and an image acquisition means in the measurement data processing system, which pertains to a seventh example which does not form part of the claimed invention.
Fig. 10 is a structure diagram of a measuring instrument and an image acquisition means in the measurement data processing system, which pertains to the seventh example.
Fig. 11 is a structure diagram of a measuring instrument and an image acquisition means in the measurement data processing system, which pertains to an eighth embodiment of the present invention.
Fig. 12 is a structure diagram of a measuring instrument and an image acquisition means in the measurement data processing system, which pertains to a ninth embodiment of the present invention.
Fig. 13 is a flowchart of measurement data processing performed by the measurement data processing device, which pertains to the first embodiment of the present invention.
Fig. 14 is a detailed flowchart of a measurement result recognizing process.
Fig. 15 is a diagram representing one example of an analysis setup DB data table form.
Fig. 16 is a diagram representing an example of display provided by an inspection record form system.

### Description of Embodiments

In the following, examples will be described by way of the drawings.

### Example 1

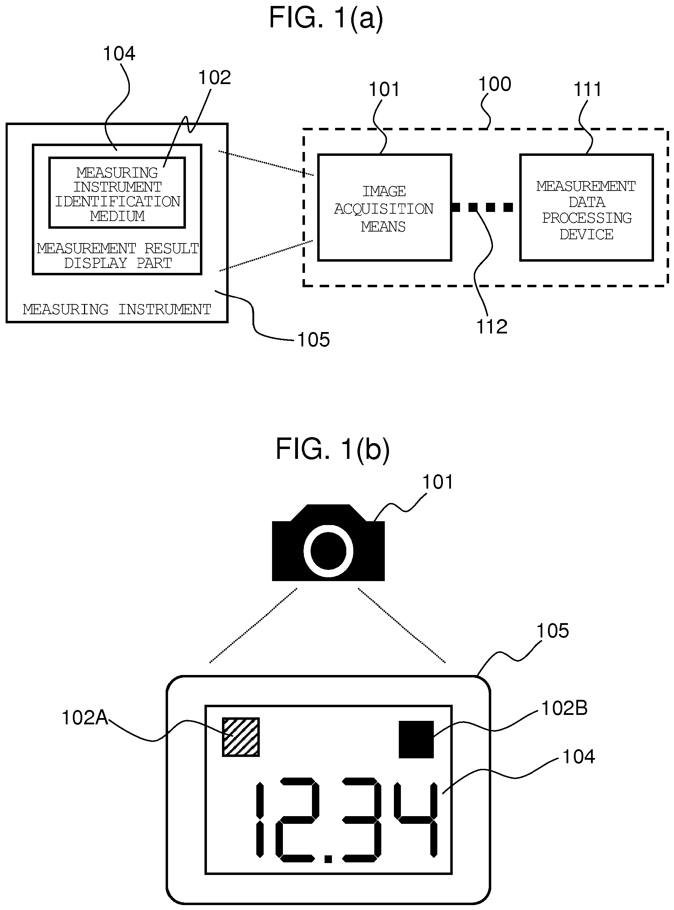

In this example, an example of a measurement data processing system is described. Fig. 1(a) is an example of a schematic structure diagram of a measurement data processing system 100 of the present example.

The measurement data processing system 100 in Fig. 1(a) is composed of an image acquisition means 101, a general-purpose measuring instrument 105 which measures, for example, any physical quantity, an image acquisition means 101 which is positioned to face a display screen of the measuring instrument, a transfer means 112, and a measurement data processing device 111.

The measuring instrument 105 includes a measurement result display part 104 which is a display to, for example, digitally display a measurement result and, on an upper surface of the measurement result display part 104, a measuring instrument identification medium 102 is placed and attached thereto which is used for the measurement data processing system to identify what model the measuring instrument is.

The measuring instrument 105 may be, for example, a dimension measuring instrument such as a laser distance meter, a laser level meter, a digital micrometer, a digital caliper, and a digital bar gage or a chronometer which measures time, a stopwatch, etc. Moreover, it may be a temperature meter, a humidity meter, etc. which measures indoor and outdoor environments. Besides, it may be an electronic health monitor such as a weight scale, a thermometer, and a blood pressure manometer.

The measurement data processing system 100 includes, as a component, even the measuring instrument identification medium 102 placed on the upper surface of the measurement result display part 104 of the measuring instrument 105.

The measurement result display part 104 is a display using liquid crystal, LED, or organic EL. A measurement result is displayed in a display. For a liquid crystal display, visibility can sometimes enhanced by installing a light source (backlight) in its rear. Moreover, for an LED or organic EL display, the display itself works as a light source and emits light. As a way of displaying a measurement result, for example, a way in which the number or size of blocks to be displayed represents a quantity is available. Moreover, a way in which numeric characters or letters are digitally displayed is available. As a digital display method, a 7 segment display, a 14 segment display, a dot matrix display, etc. are available.

The measuring instrument identification medium 102 may be, for example, a one-dimensional code like a barcode or a two-dimensional code like a QR code (a registered trademark). By using such an identification code, information identifying a measuring instrument can be retained as a string of numeric characters or letters. A specific symbol (pentacle, polygon circle, etc.) for each measuring instrument may be used.

The image acquisition means 101 captures an image of the measurement result display part 104 of the measuring instrument 105 along with the measuring instrument identification medium 102, thus acquiring an image. An image acquired by the image acquisition means 101 is transferred to the measurement data processing device 111 through the transfer means 112.

The image acquisition means 101 is, for example, a digital camera or a scanner, as depicted in Fig. 1(b). The image acquisition means 101 brings an area covering the measurement result display part 104 into a field of view and captures an image. Within the field of view, two measuring instrument identification media 102A, 102B are placed and a measurement result of the measuring instrument is displayed. BMP, PNG, JPEG, etc. are available as acquired image saving formats.

An image that is acquired by the image acquisition means 101 includes at least a measurement result displayed on the measurement result display part 104 and the measuring instrument identification media 102 within the image. A plurality of images may be transferred as a set of data to the measurement data processing device 111. A plurality of images may also be combined into a single image.

If only a single image is processed, the time and computing load for image acquisition, image transfer, and image processing is reduced. Moreover, it is not required to acquire a plurality of images in different positions and at different angles and component devices can be simplified.

The transfer means 112 is, for example, a wired cable connecting electronic devices; serial communication means complying with RS-232C, USB standards, IEEE1394 standards, etc. are available. Moreover, as wireless transfer schemes, communication means complying with different standards such as wireless LAN, Bluetooth (a registered trademark), Zigbee, and IrDA for infrared communication are available. Moreover, such a configuration is also conceivable that the image acquisition means 101 and the measurement data processing device 111 are placed on a same circuit board; in that case, wiring on the circuit board can serve as the transfer means 112.

The measurement data processing device 111 is, for example, a computer which executes an image processing program to take input of image data captured by the image acquisition means 101 and displayed on the measurement result display part 104 of the measuring instrument 105 and recognize and output measurement result data through image processing. For this computer, its minimum configuration is conceivable such that it includes a CPU, a memory, and an input/output interface configured on the same circuit board as for the image acquisition means 101, as described above. As an alternative configuration of the computer, it is also conceivable to install the above-mentioned image processing program in a supervisory computer which collects measurement data from diverse measuring instruments, creates an inspection record form, and performs various analysis and decision tasks, so that the computer will collect measurement data from diverse measuring instruments 105.

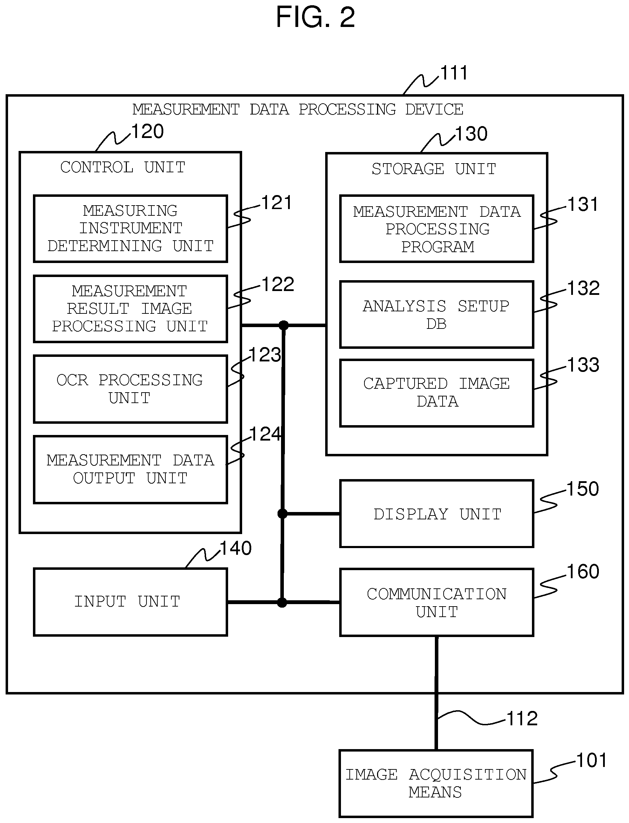

A measurement data processing device whose schematic structure is depicted in Fig. 2 is configured such that measurement data processing functions are installed in, e.g., a general-purpose computer to be coexistent with other management functions.

A storage unit 130 includes an area 131 for storing a measurement data processing program pertaining to the present invention, an analysis setup DB 132 in which various parameters for image processing are pre-stored as a database, and a captured image data storing area 133 for storing image data captured by the image acquisition means.

A control unit 120 includes the following functional units which are implemented by executing the measurement data processing program by the CPU after being read out from the storage unit 130.

A measuring instrument determining unit 121 clips out and recognizes a measuring instrument identification medium 102 from image data captured by the image acquisition means 101 and determines what model the measuring instrument 105 is.

A measurement result image processing unit 122 reads out image processing parameters appropriate for the model of the measuring instrument from the analysis setup DB 132 according to the measuring instrument model information determined by the measuring instrument determining unit 121, clips out and recognizes a measurement result display made by the measuring instrument from image data captured by the image acquisition means 101 according to the image processing parameters, and creates measurement data.

An OCR processing unit 123 carries out OCR processing on image data in an area clipped out by the measuring instrument determining unit 121 or the measurement result image processing unit 122 from image data captured by the image acquisition means 101.

A measurement data output unit 124 outputs measurement data recognized and created by the measurement result image processing unit 122 to, e.g., an inspection record form data management system.

An input unit 140 is used to make registration in the analysis setup DB or the like beforehand and input other data and instructions using, e.g., a keyboard mouse, etc.

A display unit 150 is, for example, a display device or the like and is used for, inter alia, monitoring captured image processing, displaying data in a screen when storing measurement data into an inspection record form table and processing for registration in the analysis setup DB.

A communication unit 160 is an input/output interface of the transfer means 112 connecting the image acquisition means 101 and the measurement data processing device 111, provided at the side of the measurement data processing device.

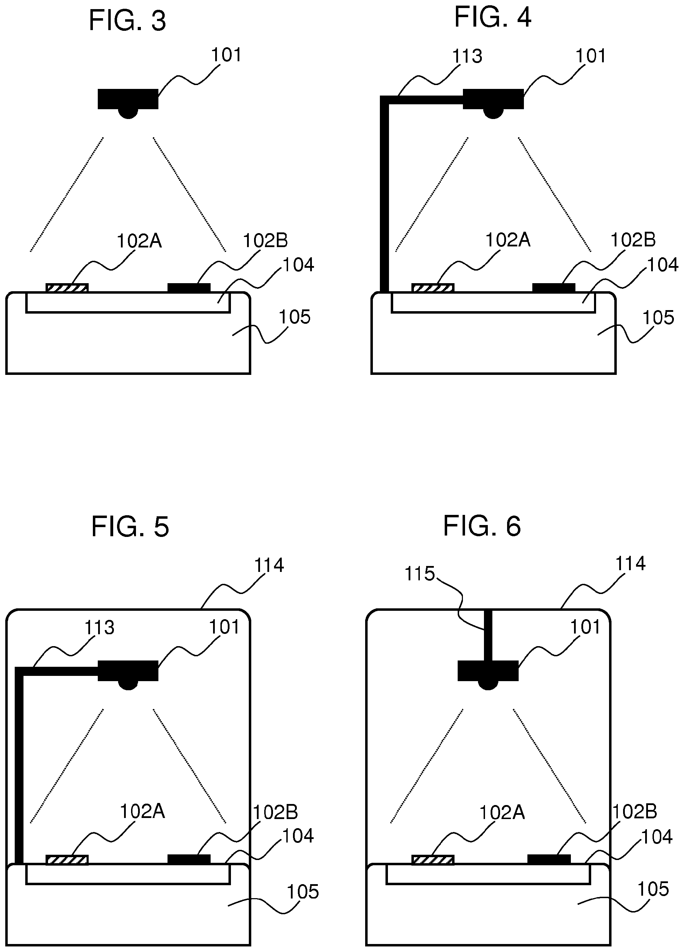

Fig. 3 is an example of a cross-sectional view of a structure diagram in which the image acquisition means 101 was positioned in an image capturing position to face a measuring instrument 105 whose identification medium should be read in the measurement data processing system of the present example. It is assumed that this is an instance where the image acquisition means 101 was manually directed toward the display screen (measurement result display part) 104 of the measuring instrument 105 or a state in which the display screen of the measuring instrument 105 was positioned for image capturing toward the image acquisition means 101 that is stationary.

The measurement data processing system 100 of the present invention involves, as objects, general-purpose measuring instruments of diverse types provided by different manufacturers and having different data output formats, captures an image of a measurement result which is displayed on the display screen though the common image acquisition means 101, recognizes the measurement result through image processing, and acquires measurement data by uniform means.

To make it possible, a feature of the present invention resides in placing measuring instrument identification media 102A, 102B properly on the surface of the display screen (measurement result display part) 104, with which the measuring instrument 105 is equipped, as depicted in Fig. 1(b), and enhancing the accuracy of recognizing a measuring instrument identification medium by making good use of the amount of light emitted by the display screen (measurement result display part).

A general-purpose measuring instrument 105 involved as an object by the measurement data processing system 100 of the present invention has the measurement result display part (display screen) 104 which emits light and a plurality of measuring instrument identification media 102A, 102B are placed and attached onto the surface of the measurement result display part 104. Here, the measuring instrument identification media 102A, 102B respectively retain information to identify the measuring instrument 105. It is sufficient that they retain minimum information by which the measuring instrument can be identified and it is not necessary that all information retained by the measuring instrument identification media 102A, 102B is completely identical.

The measuring instrument identification media 102A, 102B are characterized in that they transmit light emitted by the measurement result display part 104 and have mutually different light transmittances.

If a two-dimensional code was printed on, e.g., a transparent sheet as a measuring instrument identification medium, two-dimensional pattern printed portions do not transmit light, whereas pattern non-printed portions remain transparent and transmit light. The two-dimensional code can be recognized by binarizing a pattern and a background in an image depending on whether or not light is transmitted. In so doing, for each of the plurality of measuring instrument identification media 102A, 102B, by altering their sheets to be printed to those of materials with mutually different degrees of transparency, it is enabled to vary the light transmittance of portions without a pattern.

By placing the measuring instrument identification media 102A, 102B on the display part having a light source, the visibility of the measuring instrument identification media is enhanced and the rate of recognizing a measuring instrument identification medium increases.

Upon changing what has been displayed in the screen of the measurement result display part 104, the amount of light arriving at a measuring instrument identification medium 102 from the light source changes. When the position and angle of the image acquisition means 101 have been set so that reading can be performed optimally with a given amount of light, the change in the amount of light causes a change in the brightness of portions without a pattern in an image, which makes the contour of the binarized pattern unclear, and there is a possibility of decreasing the recognition rate (a percentage at which the pattern is recognized correctly). As a countermeasure to this, by placing a plurality of measuring instrument identification media 102 which are respectively made of sheets with different light transmittances, it is made possible that the brightness difference between a pattern and a background in an image changes to different degrees for each medium. Such a way of determination is used that, when pattern recognition of any one of measuring instrument identification media 102 placed in a plurality of positions has been performed correctly, a process of recognizing a plurality of measuring instrument identification media 102 is determined to have been completed. Thus, even when a change in the amount of light occurs in the display part, probability that pattern recognition is performed correctly increases and the rate of recognizing a measuring instrument identification medium increases.

As for how to vary the light transmittance of a plurality of measuring instrument identification media 102A, 102B, the same material is used and only thickness may be varied. By using the same material, cost can be reduced. Moreover, the same material is used, thickness is uniformed, and different types of identification code may be used. For example, by separately placing a one-dimensional code and a two-dimensional code, each including at least the same measuring instrument identification information, different patterns produce different light transmittances. Moreover, the same material is used, thickness is uniformed, the same type of identification code is used, and the size and complexity of a pattern may be varied. By differentiating information other than measuring instrument identification included in each identification code, it is enabled to create patterns with their complexity differing depending on information amount. For example, if a QR code is used, it can be varied by creating a different pattern in code cells other than a fixed pattern in addition to changing the size. By using the same material and uniforming thickness, cost can be more reduced than when the same material is used solely.

As a material of which a measuring instrument identification medium is made, for example, a transparent synthetic resin film or the like can be used, such as cellophane, a polypropylene film, and a polyethylene film.

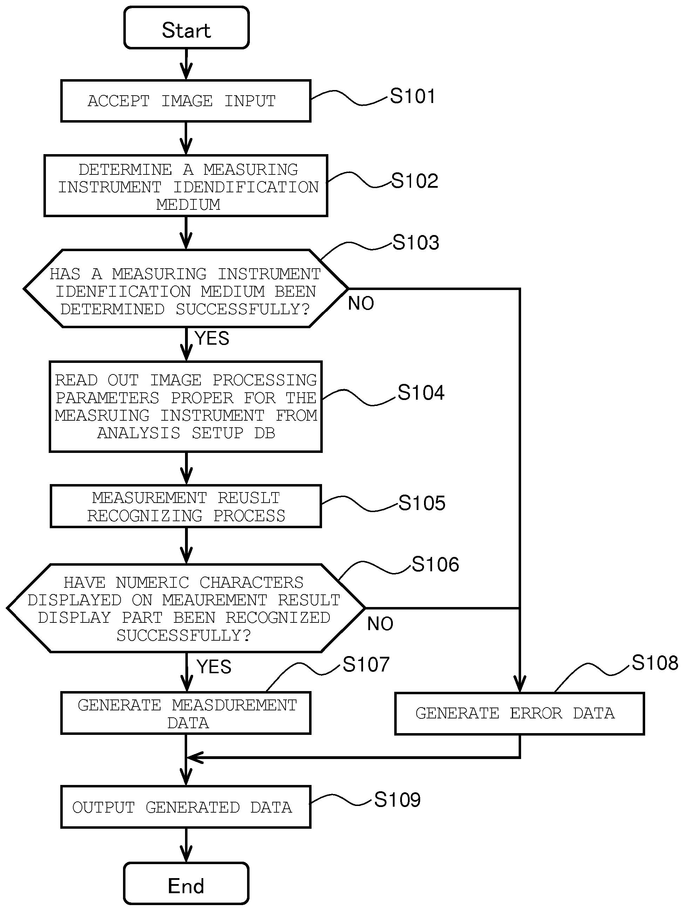

Fig. 13 is an example of a flowchart of measurement data processing by the measurement data processing device 111 of the present example.

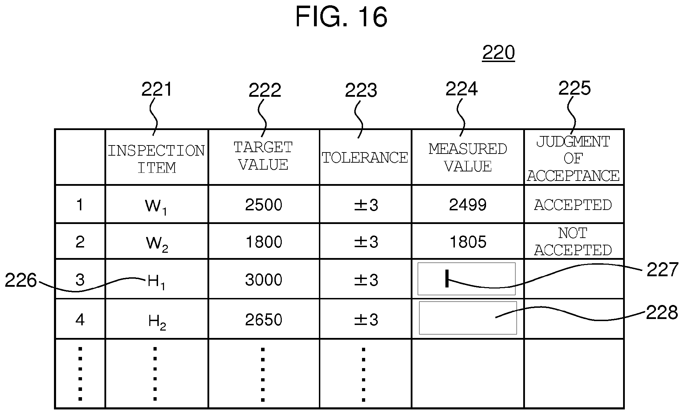

For instance, on the measurement data processing device 111, an inspection record form management program (which is not depicted in Fig. 2) is run which causes the display part 140 to display an inspection record form 220 which is exemplified in Fig. 16 and a measured value 224 column's cell is now blank for an inspection item H₁ (226) in a third row of data fields in Fig. 16 and an cursor 227 is displayed in that cell, awaiting input. At this time, the measurement data processing program of the present example is called and, when a start-up switch of the image acquisition means 101 has been turned on (for instance, an inspector has turned the switch on) in order to capture an image of the measurement result display part 104 of a measuring instrument 105 that exists in a manufacturing factory where the inspection item H₁ (226) should be measured, this measurement data processing program is executed.

Operation in accordance with the flowchart in g. 13 is as follows.

At step S101, the measuring instrument determining unit 121 in the measurement data processing device 111 accepts, as input, image data acquired by the image acquisition means 101 via the transfer means 112 and the communication unit 150.

At step S102, the measuring instrument determining unit 121 in the measurement data processing device 111 executes a process of reading a measuring instrument identification medium 102 in the image that it accepted the input. A plurality of measuring instrument identification media 102 are placed beforehand in appropriate positions on the measurement result display part of the measuring instrument. Upon proper completion of recognizing at least one measuring instrument identification media, this determination step terminates. This determination step identifies a measuring instrument identification code.

At step S103, if a measuring instrument identification medium has successfully been determined properly in step S102, processing proceeds to step S104; if proper determination has failed, processing proceeds to step S108.

At step S104, the measurement result image processing unit 122 in the measurement data processing device 111 reads out image processing parameters from the analysis setup DB 132 according to information of the measuring instrument identification code identified in step S102.

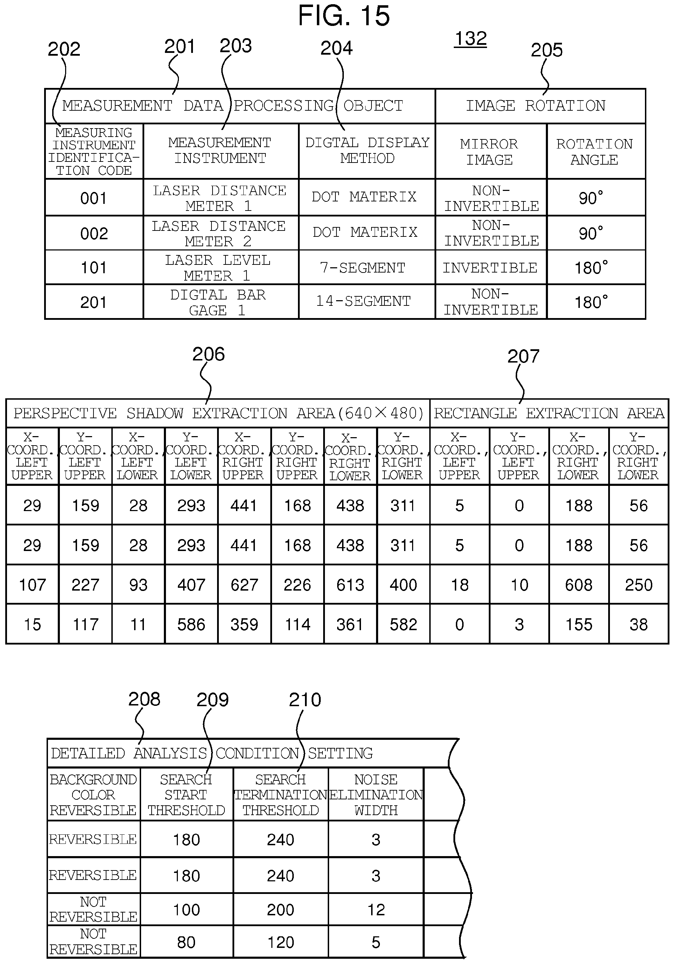

The analysis setup DB 132 is created beforehand in form of a data table 200 which is exemplified in Fig. 15. The data table 200 is composed of data item headings as follows: measurement data processing object 201, image rotation 205, perspective shadow extraction area 206, rectangle extraction area 207, and detailed analysis condition setting 208. Under the data item headings, image processing parameters are defined and registered in cells in each row corresponding to a measuring instrument identification code. In Fig. 15, an example is presented in which image processing parameters for four models of measuring instruments are registered.

The measurement result image processing unit 122 searches the analysis setup DB 132 by the identified measuring instrument identification code and image parameters in the corresponding row are read out.

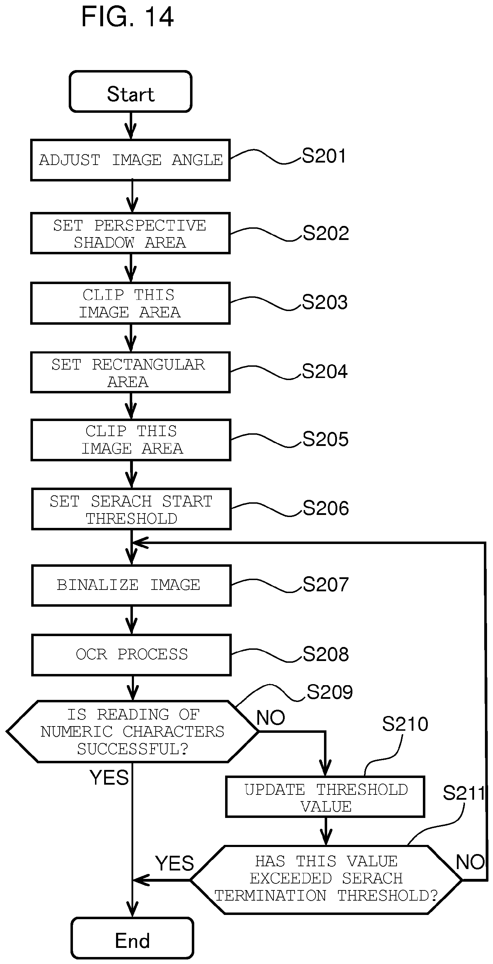

At step S105, the measurement result image processing unit 122 analyzes the image for which input was accepted in step S101 according to the image processing parameters which have been read out and executes a process of recognizing a measurement result included in the image. Detail of this recognizing process is described in a flowchart in Fig. 14.

At step S201, the process adjusts an image angle according to a parameter, mage rotation 205.

At step S202, on the assumption that the image surface has a gradient, the process sets the X and Y coordinates of four corners of a numeric character area for showing a measurement result within the image to clip this area in a large frame, according to a parameter, perspective shadow extraction area 206 in the analysis setup DB data table 200.

At step S203, the process clips the area of which four corners' coordinates were set in step S202 and corrects the gradient of the image surface.

At step S204, the process sets the X and Y coordinates of two opposite corners of a more precise rectangular area in the numeric character area of a measurement result within the image to clip the rectangular area from the gradient corrected image, according to a parameter, rectangle extraction area 207 in the analysis setup DB data table 200.

At step S205, the process clips the rectangular area of which two corners' coordinates were set in step S204.

At step S206, to recognize numeric characters representing a measurement result in the clipped rectangular area, the process reads out a search start threshold value for binarization from a column, search start threshold 209 in the analysis setup DB data table 200 and sets an initial threshold value.

At step S207, the process binarizes the image in the rectangular area by the set threshold value.

At step S208, the process selects an OCR process corresponding to a parameter in a column 204, digital display method in the analysis setup DB data table 200 and executes the OCR process on the binarized image in the rectangular area.

At step S209, as a result of the OCR process, if proper reading is successful for all numeric characters representing a measuring result in the rectangular area, this measurement result recognizing process terminates; if proper reading is unsuccessful for any of the numerical characters, the process proceeds to step S210.

At step S210, the process updates the previously set threshold value by predetermined step size.

At step S211, if the updated threshold value has become more than a parameter value registered in a column 210, search termination threshold 210 in the analysis setup DB data table 200, the process terminates the measurement result search as an error and this measurement result recognizing process terminates. If the updated threshold value is still below or at the search termination threshold value, the process repeatedly executes a series of steps S207, S208, and S209.

Returning to step S106 in the flowchart in Fig. 13, if all the numeric characters representing a measurement result have successfully been recognized properly in the measuring result recognizing process in step S105, the process proceeds to step S107; if not so, the process proceeds to step S108.

At step S107, the measurement data output unit 124 in the measurement data processing device 111 generates measurement data, based on the results of execution of step S102 and step S105. The measurement data includes at least measuring instrument identification information and measurement result information. Moreover, the measurement data may include image information such as an image filename and format and a time stamp at which it was stored, a time stamp at which the image input was accepted, time taken for analysis, and image processing parameters in the analysis setup DB.

By having measuring instrument identification information in conjunction with a measurement result, as measurement data, it is possible to uniquely identify a measurement result measured by which measuring instrument, if there are a plurality of measuring instruments.

At step S108, the measurement data output unit 124 in the measurement data processing device 111 generates error data, if the execution of step S102 or step S105 has failed. The error data is a specific string of characters (such as "Error") to indicate an error to a person in charge of measurement. The string of characters may be null characters (" ") or there may be no amount of information. Moreover, the error data may include image information and analysis information. Moreover, if the execution of step S102 is successful, the error data may include measuring instrument identification information determined in step S102.

By including measuring instrument identification information as error data, it is clarified that what step execution has failed is step S105, not step S102, and this helps in taking a countermeasure.

At step S109, the measurement data output unit 124 in the measurement data processing device 111 outputs the data generated in step S107 or step S108 and the measurement data processing terminates.

Returning to the screen displaying the inspection record form 220 depicted in Fig. 16, the inspection record form management program mentioned previously receives an output of the measurement data output unit 114 in the measurement data processing device 111 and, if the output is measurement data, displays the measurement data in the appropriate measured value column's cell with the cursor 227 being displayed in the cell, judges whether the measurement result falls within a tolerance 223 around its target value 222, and displays a result of the judgment in the appropriate cell of a column, judgment of acceptance 225. Then, the cursor is moved to a blank cell 228 of the measured value column in the row of an inspection item H₂ that follows and the measurement data processing program of the present example will be called again. And now, as for the cursor 227, if the output of the measurement data output unit 114 is error data, the inspection record form management program does not move the cursor and presents error data to a person in charge of measurement to prompt the person to perform measurement again or take a countermeasure in conceivable practical operation.

As described previously, the measurement data processing system 100 of the present example outputs measurement data and, by combining this system with computerized record forms to record measurement results, it is possible to build a computerized record form system that collects measurement results automatically. Moreover, by outputting error data, it is possible to indicate that reading a measurement result has failed to a person in charge of measurement.

By outputting measurement data or error data depending on analysis result, in a computerized record form system, it is possible to automatically proceed to a next item for which a measurement result should be input, if the measurement data is output, and accept that the same item should be measured again if the error data is output. By providing separate processing flows for measurement data and error data within the computerized record form system, it is possible to build a measurement system in which only a measurement work should be repeated even if an error has occurred. For instance, in a case where a person has to hold a measuring instrument with both hands, it would become possible to automatically select a next item for which a measurement result should be input after measurement or measure the same item again in case of an error, which leads to improving measurement efficiency and shortening measurement time.

And now, in the present example, an example was described in which the measurement data processing program and the inspection record form management program are run on the same measurement data processing device. However, a system can be built similarly even in a case where the measurement data processing program is solely run on the measurement data processing device and the inspection record form management program is run on another computer. In that case, both computers are connected by a communication means and output of the measurement data output unit 114 will be output to the inspection record form management program running on another computer via the communication unit 150.

### Example 2

Fig. 4 depicts a second example. The same components as in Fig. 3 are assigned the same reference signs and their description is omitted, because their structure and operation are the same.

In comparison with Fig. 3, a support means 113 is added in Fig. 4. The support means 113 is installed onto the measuring instrument 105 and supports the image acquisition means 101. If a non-wired type of transfer means is used, an independent measuring instrument is available.

By the support means 113, the measuring instrument 105 and the mage acquisition means 101 are united in an integral structure and, thus, a portable measuring means can be provided.

### Example 3

Fig. 5 depicts a third example. The same components as in Fig. 4 are assigned the same reference signs and their description is omitted, because their structure and operation are the same.

In comparison with Fig. 4, a cover 114 is added in Fig. 5. The cover 114 is installed over the measuring instrument 105 and prevents external light from being incident on the measurement result display part 104. The cover 114 serves to eliminate an error in reading a measuring instrument identification medium reading error and recognizing a measurement result because of external light incident on the display part and, thus, the recognition rate increases.

### Example 4

Fig. 6 depicts a fourth example. The same components as in Fig. 5 are assigned the same reference signs and their description is omitted, because their structure and operation are the same.

In comparison with Fig. 5, the support means 113 is removed and a support means 115 is added instead in Fig. 6. The support means 115 is installed onto the cover 114 and supports the image acquisition means 101.

In comparison with the support means 113, the support means 115 has a shorter extension portion allowing it to be installed onto the measuring instrument and can make its structure simple.

### Example 5

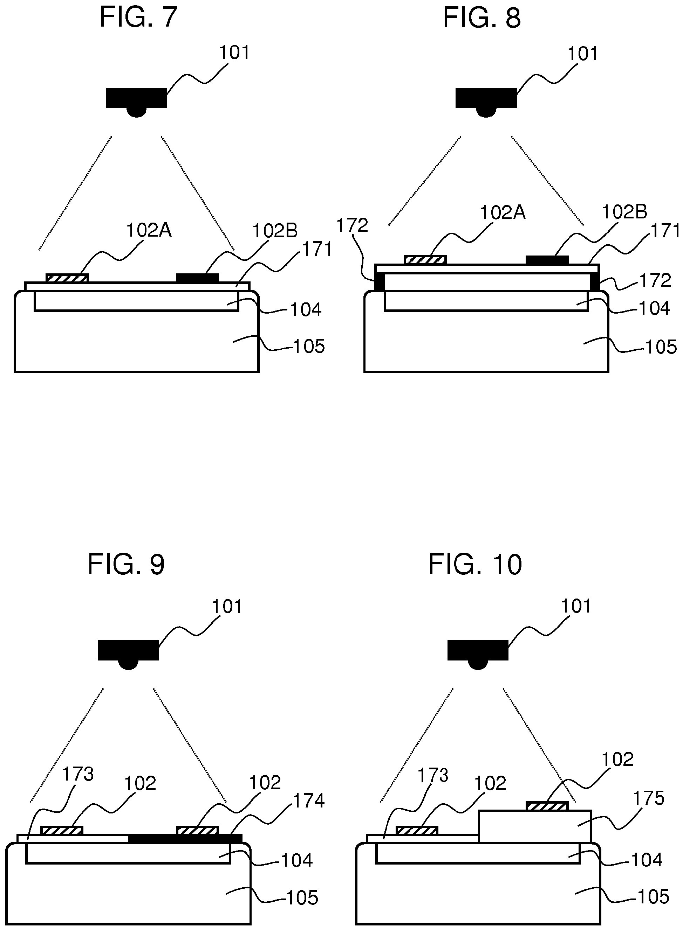

Fig. 7 depicts a fifth example. The same components as in Fig. 3 are assigned the same reference signs and their description is omitted, because their structure and operation are the same.

In comparison with Fig. 3, a support layer 171 is added in Fig. 7. The support layer 171 rests on a measurement result display means 104 and supports measuring instrument identification media 102A and 102B. Light emitted from the measurement result display means 104 passes through the support layer 171 and then passes through the respective measuring instrument identification media.

By placing a plurality of measuring instrument identification media 102A, 102B on the support layer 171 beforehand, it is possible to place a plurality of measuring instrument identification media on the measurement result display means 104 all at once by one work, when doing so. When also removing them from the measurement result display means 104, likewise, the work can be simplified.

Moreover, by varying the material and thickness of the support layer 171 to vary the transmittance of the support layer 171, the transmittance of a plurality of measuring instrument identification media can be varied uniformly and transmittance adjustment is facilitated.

### Example 6

Fig. 8 depicts a sixth example. The same components as in Fig. 7 are assigned the same reference signs and their description is omitted, because their structure and operation are the same.

In comparison with Fig. 7, a support means 172 is added in Fig. 8. The support means 172 rests on the measuring instrument 105 and supports the support layer 171. There is no contact between the measurement result display means 104 and the support layer 171 and, thus, it is possible to reduce a risk of damaging the display surface, when placing measuring instrument identification media, and deteriorating visibility.

### Example 7 (does not form part of the claimed invention)

Fig. 9 and Fig. 10 depict a seventh example. The same components as in Fig. 3 are assigned the same reference signs and their description is omitted, because their structure and operation are the same.

In comparison with Fig. 3, support layers 173 and 174 are added in Fig. 9 and measuring instrument identification media 102 that are identical are placed. The support layers 173 and 174 rest on the measurement result display means 104 and support the measuring instrument identification media 102, respectively. Light emitted from the measurement result display means 104 passes through the respective support layers and then passes through the respective measuring instrument identification media.

For the support layers 173 and 174, by using materials with different degrees of transparency to vary their transmittance, the transmittance of the respective measuring instrument identification media can be varied, even if identical measuring instrument identification media are used.

There is no need to vary the material, thickness, and identification code type for each measuring instrument identification medium and, thus, man-hours for creating measuring instrument identification media and their management are decreased.

Moreover, in comparison with Fig. 9, the support layer 174 is changed to a support layer 175. Even if the support layers 173 and 175 are made of the same material, by varying their thickness, the same advantageous effect can be obtained.

### Example 8

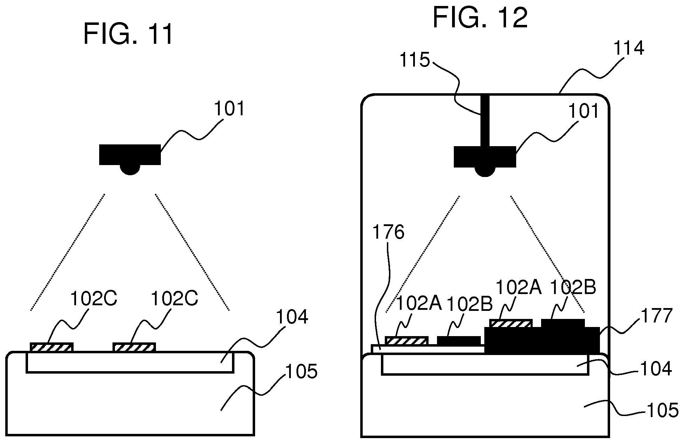

Fig. 11 depicts an eighth example. The same components as in Fig. 3 are assigned the same reference signs and their description is omitted, because their structure and operation are the same.

In comparison with Fig. 3, the measuring instrument identification media 102A and 102B are removed and two measuring instrument identification media 102C are added in Fig. 11. Given that the amount of light from the measurement result display means 104 varies depending on position (for example, one light source is located in the center and the amount of light gradually decreases toward the periphery from the center), by placing the measuring instrument identification media 102C in different positions depending on variation in the light amount, it is possible to vary the amount of light transmitted through the media.

By only preparing a plurality of identical measuring instrument identification media, the recognition rate can be increased and man-hours for preparation can be decreased.

### Example 9

Fig. 12 depicts a ninth example. The same components as in Fig. 6 are assigned the same reference signs and their description is omitted, because their structure and operation are the same.

In comparison with Fig. 6, the measuring instrument identification media 102A and 102B are removed and two pairs of measuring instrument identification media 102A and 102B and support layers 176, 177 are added in Fig. 12.

The present example is a combination of the fourth and seventh examples and, moreover, the number of measuring instrument identification media has increased from two to four. By combining two types of measuring instrument identification media and two types of support layers, it is possible to vary the transmittance of the measuring instrument identification media in four steps.

The present invention is limited by the appended claims. For example, the foregoing examples are those described in detail to explain the present invention clearly and the invention is not necessarily limited to those including all components described. As in the ninth example, a subset of the components of an example can be replaced by components of another example. To the components of an example, components of another example can be added. For a subset of the components of each example, other components can be added to the subset or the subset can be removed or replaced by other components.

Moreover, a subset or all of the aforementioned components, functions, processing units, processing means, etc. may be implemented by hardware; for example, by designing an integrated circuit to implement them. Moreover, the aforementioned components, functions, etc. may be implemented by software in such a way that a processor interprets and executes a program that implements the respective functions. Information such as a program implementing the respective functions, tables, and files can be placed in a recording device such as a memory, hard disk, and SSD (Solid State Drive) or a recording medium such as an IC card, SD card, and DVD.

Moreover, control lines and information lines which are considered as necessary for explanation are depicted and all control lines and information lines involved in a product are not necessarily depicted. Actually, almost all components may be considered to be interconnected.

### Reference Signs List

- 100: Measurement data processing system,
- 101: Image acquisition means,
- 102, 102A, 102B: Measuring instrument identification medium,
- 104: Measurement result display part,
- 105: Measuring instrument,
- 111: Measurement data processing device,
- 112: Transfer means,
- 113: Support means,
- 114: Cover,
- 115: Support means,
- 120: Control unit,
- 121: Measuring instrument determining unit,
- 122: Measurement result image processing unit,
- 123: OCR processing unit,
- 124: Measurement data output unit,
- 130: Storage unit,
- 131: Area for storing a measurement data processing program,
- 132: Analysis setup DB,
- 133: Captured image data storing area,
- 140: Input unit,
- 150: Display part,
- 160: Communication unit,
- 171, 173, 174, 175, 176, 177: Support layer,
- 172: Support means,
- 200: Analysis setup DB data table,
- 201: Heading, measurement data processing object,
- 202: Column, measuring instrument identification code,
- 203: Column, measuring instrument,
- 204: Column, digital display method,
- 205: Heading, image rotation,
- 206: Heading, perspective shadow extraction area,
- 207: Heading, rectangle extraction area,
- 208: Heading, detailed analysis condition setting,
- 209: Column, search start threshold,
- 210: Column, search termination threshold,
- 220: Screen displaying an inspection record form.

## Claims

1. A measurement data processing system comprising:
a measuring instrument (105) having a display part (104) to display a measurement result, the display part being provided with a light source;
a plurality of measuring instrument identification media (102A,102B) placed on the display part (104) of the measuring instrument and having respectively different transmittances of light from the light source;
an image acquisition means (101) that captures an image of a measurement result displayed on the display part (104) and of the plurality of measuring instrument identification media; and
a measurement data processing device (111) that recognizes a measuring instrument identification medium from the image acquired, reads out image processing parameters appropriate for the model of the measuring instrument from a database based on the measuring instrument identification information obtained by successfully completing the recognition process of at least one measuring instrument identification medium, recognizes a measurement result from the image acquired according to the image processing parameters (200) read out, and outputs measurement data or error data.

2. The measurement data processing system according to claim 1, further comprising a support means (113) with its one end being fixed to the image acquisition means (101) and its other end being fixed to the measuring instrument (105), the support means holding the image acquisition means in a position facing the display part of the measuring instrument.

3. The measurement data processing system according to claim 1, further comprising a cover (114) that envelops the display part (104) of the measuring instrument and the image acquisition means (101) inside and prevents external light from being incident on the display part.

4. The measurement data processing system according to claim 1, further comprising:
a cover (114) that envelops the display part (104) of the measuring instrument and the image acquisition means (101) inside and prevents external light from being incident on the display part,
wherein the cover is connected and fixed to a housing of the measuring instrument (105); and
a support means (115) with its one end being fixed inside the cover, the support means holding the image acquisition means in a position facing the display part of the measuring instrument.

5. The measurement data processing system according to any one of claims 1 to 4, wherein the plurality of measuring instrument identification media (102A,102B) having different transmittances respectively differ in their material.

6. The measurement data processing system according to any one of claims 1 to 4, wherein the plurality of measuring instrument identification media (102A,102B) having different transmittances respectively differ in their thickness.

7. The measurement data processing system according to any one of claims 1 to 4, wherein the plurality of measuring instrument identification media (102A,102B) having different transmittances are respectively different types of identification code.

8. The measurement data processing system according to any one of claims 1 to 4, wherein the plurality of measuring instrument identification media (102A,102B) having different transmittances have respectively different identification code patterns in size or density.

9. The measurement data processing system according to any one of claims 1 to 4, wherein the plurality of measuring instrument identification media (102,102A,102B) are placed on a support layer (171,173,174,175,176,177) resting on the display part.

10. The measurement data processing system according to claim 9, wherein the support layer (171) is supported by a support means (172) resting on the measuring instrument (105) so as to be parallel across a gap with the display part (104) surface.

11. The measurement data processing system according to claim 1, wherein an image acquired by the image acquisition means (101) includes both a measurement result of the measuring instrument and a plurality of measuring instrument identification media (102,102A,102B,102C) within a single image.

12. The measurement data processing system according to claim 1, wherein the measurement data processing device (111) outputs acquired image information, analysis information indicating ongoing processing over time, and error information in case of failure in recognizing each by measuring instrument identification media and/or recognizing a measurement result or any one of those mentioned above.

13. The measurement data processing system according to claim 12, wherein, as the error information, output is a code representing an error and/or measuring instrument identification information, when recognizing a measuring instrument identification medium is only successful.

## Patentansprüche

1. Messdatenverarbeitungssystem, das Folgendes umfasst:
ein Messinstrument (105) mit einem Anzeigeabschnitt (104), um ein Messergebnis anzuzeigen, wobei der Anzeigeabschnitt mit einer Lichtquelle versehen ist;
eine Vielzahl von Messinstrumentidentifikationsmedien (102A, 102B), die auf dem Anzeigeabschnitt (104) des Messinstruments angeordnet sind und jeweils unterschiedliche Transmissionsgrade von Licht aus der Lichtquelle aufweisen;
ein Bildaufnahmemittel (101), das ein Bild eines auf dem Anzeigeabschnitt (104) angezeigten Messergebnisses und der Vielzahl von Messinstrumentidentifikationsmedien aufnimmt; und
eine Messdatenverarbeitungsvorrichtung (111), die ein Messinstrumentidentifikationsmedium auf dem aufgenommenen Bild erkennt, Bildverarbeitungsparameter, die für das Modell des Messinstruments geeignet sind, aus einer Datenbank ausliest, auf Grundlage der Messinstrumentidentifikationsinformationen, die erhalten wurden, indem der Erkennungsvorgang von zumindest einem Messinstrumentidentifikationsmedium erfolgreich abgeschlossen wurde, ein Messergebnis aus dem aufgenommenen Bild gemäß den ausgelesenen Bildverarbeitungsparametern (200) erkennt und Messdaten oder Fehlerdaten ausgibt.

2. Messdatenverarbeitungssystem nach Anspruch 1, das außerdem ein Halterungsmittel (113) umfasst, dessen eines Ende an dem Bildaufnahmemittel (101) befestigt ist und dessen anderes Ende auf dem Messinstrument (105) befestigt ist, wobei das Halterungsmittel das Bildaufnahmemittel in einer Position hält, die dem Anzeigeabschnitt des Messinstruments gegenüberliegt.

3. Messdatenverarbeitungssystem nach Anspruch 1, das außerdem eine Abdeckung (114) umfasst, die den Anzeigeabschnitt (104) des Messinstruments und das Bildaufnahmemittel (101) in ihrem Inneren umhüllt und verhindert, dass externes Licht auf den Anzeigeabschnitt einfällt.

4. Messdatenverarbeitungssystem nach Anspruch 1, das außerdem Folgendes umfasst:
eine Abdeckung (114), die den Anzeigeabschnitt (104) des Messinstruments und das Bildaufnahmemittel (101) in ihrem Inneren umhüllt und verhindert, dass externes Licht auf den Anzeigeabschnitt einfällt,
wobei die Abdeckung mit einem Gehäuse des Messinstruments (105) verbunden und an diesem befestigt ist; und
ein Halterungsmittel (115), dessen eines Ende innerhalb der Abdeckung befestigt ist, wobei das Halterungsmittel das Bildaufnahmemittel in einer Position hält, die dem Anzeigeabschnitt des Messinstruments gegenüberliegt.

5. Messdatenverarbeitungssystem nach einem der Ansprüche 1 bis 4, wobei die Vielzahl an Messinstrumentidentifikationsmedien (102A, 102B), die unterschiedliche Transmissionsgrade aufweisen, aus jeweils unterschiedlichen Materialien sind.

6. Messdatenverarbeitungssystem nach einem der Ansprüche 1 bis 4, wobei die Vielzahl an Messinstrumentidentifikationsmedien (102A, 102B), die unterschiedliche Transmissionsgrade aufweisen, jeweils unterschiedliche Dicken aufweisen.

7. Messdatenverarbeitungssystem nach einem der Ansprüche 1 bis 4, wobei die Vielzahl an Messinstrumentidentifikationsmedien (102A, 102B), die unterschiedliche Transmissionsgrade aufweisen, jeweils unterschiedliche Arten von Identifikationscodes sind.

8. Messdatenverarbeitungssystem nach einem der Ansprüche 1 bis 4, wobei die Vielzahl an Messinstrumentidentifikationsmedien (102A, 102B), die unterschiedliche Transmissionsgrade aufweisen, jeweils unterschiedliche Identifikationscodemuster in Größe und Dichte aufweisen.

9. Messdatenverarbeitungssystem nach einem der Ansprüche 1 bis 4, wobei die Vielzahl an Messinstrumentidentifikationsmedien (102A, 102B) auf einer Trägerschicht (171, 173, 174, 175, 176, 177), die auf dem Anzeigeabschnitt aufliegt, angeordnet sind.

10. Messdatenverarbeitungssystem nach Anspruch 9, wobei die Trägerschicht (171) durch ein Auflagemittel (172) getragen wird, das auf dem Messinstrument (105) aufliegt, sodass es an einem Spalt parallel zur Oberfläche des Anzeigeabschnitts (104) ist.

11. Messdatenverarbeitungssystem nach Anspruch 1, wobei ein durch das Bildaufnahmemittel (101) aufgenommenes Bild sowohl ein Messergebnis des Messinstruments als auch eine Vielzahl von Messinstrumentidentifikationsmedien (102, 102A, 102B, 102C) in einem einzelnen Bild umfasst.

12. Messdatenverarbeitungssystem nach Anspruch 1, wobei die Messdatenverarbeitungsvorrichtung (111) aufgenommene Bildinformationen, Analyseinformationen zu laufender Verarbeitung über die Zeit und Fehlerinformationen im Fall eines Fehlers beim Erkennen jeweils durch Messinstrumentidentifikationsmedien und/oder durch das Erkennen eines Messergebnisses oder eines beliebigen der vorgenannten ausgibt.

13. Messdatenverarbeitungssystem nach Anspruch 12, wobei als die Fehlerinformationen ein Code ausgegeben wird, der einen Fehler und/oder Messinstrumentidentifikationsinformationen repräsentiert, nur wenn das Erkennen eines Messinstrumentidentifikationsmediums erfolgreich ist.

## Revendications

1. Système de traitement de données de mesure comprenant :
un instrument de mesure (105) présentant une partie d'affichage (104) destinée à afficher un résultat de mesure, la partie d'affichage étant dotée d'une source lumineuse ;
une pluralité de supports d'identification d'instruments de mesure (102A, 102B) placés sur la partie d'affichage (104) de l'instrument de mesure et présentant des transmittances respectivement différentes de la lumière provenant de la source lumineuse ;
un moyen d'acquisition d'image (101) qui capture une image d'un résultat de mesure affiché sur la partie d'affichage (104) et de la pluralité de supports d'identification d'instruments de mesure ; et
un dispositif de traitement de données de mesure (111) qui reconnaît un support d'identification d'instruments de mesure à partir de l'image acquise, lit des paramètres de traitement d'image appropriés pour le modèle de l'instrument de mesure à partir d'une base de données basée sur les informations d'identification d'instrument de mesure obtenues en achevant avec succès le processus de reconnaissance d'au moins un support d'identification d'instruments de mesure, reconnaît un résultat de mesure à partir de l'image acquise selon les paramètres de traitement d'image (200) lus, et fournit en sortie des données de mesure ou des données d'erreur.

2. Système de traitement de données de mesure selon la revendication 1, comprenant en outre un moyen de support (113) dont une extrémité est fixée au moyen d'acquisition d'image (101) et dont l'autre extrémité est fixée à l'instrument de mesure (105), le moyen de support maintenant le moyen d'acquisition d'image dans une position qui fait face à la partie d'affichage de l'instrument de mesure.

3. Système de traitement de données de mesure selon la revendication 1, comprenant en outre un couvercle (114) qui enveloppe la partie d'affichage (104) de l'instrument de mesure ainsi que le moyen d'acquisition d'image (101) à l'intérieur, et qui empêche la lumière extérieure d'être incidente sur la partie d'affichage.

4. Système de traitement de données de mesure selon la revendication 1, comprenant en outre :
un couvercle (114) qui enveloppe la partie d'affichage (104) de l'instrument de mesure ainsi que le moyen d'acquisition d'image (101) à l'intérieur, et qui empêche la lumière externe d'être incidente sur la partie d'affichage ;
dans lequel le couvercle est connecté et fixé à un boîtier de l'instrument de mesure (105) ; et
un moyen de support (115) dont l'extrémité est fixée à l'intérieur du couvercle, le moyen de support maintenant le moyen d'acquisition d'image dans une position qui fait face à la partie d'affichage de l'instrument de mesure.

5. Système de traitement de données de mesure selon l'une quelconque des revendications 1 à 4, dans lequel les supports de la pluralité de supports d'identification d'instruments de mesure (102A, 102B) présentant des transmittances respectivement différentes diffèrent par leur matériau.

6. Système de traitement de données de mesure selon l'une quelconque des revendications 1 à 4, dans lequel les supports de la pluralité de supports d'identification d'instruments de mesure (102A, 102B) présentant des transmittances respectivement différentes diffèrent par leur épaisseur.

7. Système de traitement de données de mesure selon l'une quelconque des revendications 1 à 4, dans lequel les supports de la pluralité de supports d'identification d'instruments de mesure (102A, 102B) présentant des transmittances différentes correspondent à des types respectivement différents de code d'identification.

8. Système de traitement de données de mesure selon l'une quelconque des revendications 1 à 4, dans lequel les supports de la pluralité de supports d'identification d'instruments de mesure (102A, 102B) présentant des transmittances différentes ont des motifs de code d'identification respectivement différents en taille ou en densité.

9. Système de traitement de données de mesure selon l'une quelconque des revendications 1 à 4, dans lequel les supports de la pluralité de supports d'identification d'instruments de mesure (102, 102A, 102B) sont placés sur une couche de support (171, 173, 174, 175, 176, 177) reposant sur la partie d'affichage.

10. Système de traitement de données de mesure selon la revendication 9, dans lequel la couche de support (171) est prise en charge par un moyen de support (172) reposant sur l'instrument de mesure (105) de manière à être parallèle à travers un espace avec la surface de partie d'affichage (104) .

11. Système de traitement de données de mesure selon la revendication 1, dans lequel une image acquise par le moyen d'acquisition d'image (101) inclut à la fois un résultat de mesure de l'instrument de mesure et une pluralité de supports d'identification d'instruments de mesure (102, 102A, 102B, 102C) au sein d'une unique image.

12. Système de traitement de données de mesure selon la revendication 1, dans lequel le dispositif de traitement de données de mesure (111) fournit en sortie des informations d'image acquise, des informations d'analyse indiquant un traitement en cours au fil du temps, et des informations d'erreur en cas d'échec dans la reconnaissance par chacun des supports d'identification d'instruments de mesure et/ou dans la reconnaissance d'un résultat de mesure, ou de l'un quelconque de ceux mentionnés ci-dessus.

13. Système de traitement de données de mesure selon la revendication 12, dans lequel, en tant que les informations d'erreur, la sortie est un code représentant une erreur et/ou des informations d'identification d'instruments de mesure, lorsque la reconnaissance d'un support d'identification d'instruments de mesure est réussie uniquement.
